# EUROPÄISCHE PATENTANMELDUNG

(11) **EP 0 662 411 A1**
(43) Veröffentlichungstag der Anmeldung: **12.07.1995**
(21) Anmeldenummer: 95100199.9
(22) Anmeldetag: 09.01.1995
(51) Int. Cl.: B61D 1/06, B62D 31/04, B63B 29/02, B64D 11/00

(54) **Anordnung von Sitzplätzen in Fahrzeugen**

(30) Priorität: 07.01.1994 DE 4400342
(71) Anmelder: VIEREGG & RÖSSLER GmbH, D-80337 München (DE)
(72) Erfinder: Rössler, Karlheinz, D-80337 München (DE); Vieregg, Martin, D-85521 Ottobrunn (DE)
(74) Vertreter: Münich, Wilhelm, Dr.

(57) **Zusammenfassung**

Beschrieben wird eine Anordnung von Sitzplätzen in Fahrzeugen des Tagesreiseverkehrs in zwei Reihen übereinander, mit einem gemeinsamen Gang, von dem aus Leitern oder Stufen zu den Sitzplätzen in den beiden Reihen führen.

Die Erfindung zeichnet sich dadurch aus, daß die Sitzplätze derart versetzt übereinander angeordnet sind,
- daß der Fußboden vor allen Sitzen der oberen Reihe die Decke über allen Sitzflächen der unteren Reihe bildet, und
- daß die Sitzfläche aller Sitze der oberen Reihe die Decke über dem Fußraum vor allen Sitzen der unteren Reihe bildet, und
- daß vor sämtlichen Sitzplätzen die volle Raumhöhe zum aufrechten Stehen oder Gehen erhalten bleibt.

## Beschreibung

Die Erfindung bezieht sich auf eine Anordnung von Sitzplätzen in Fahrzeugen des Tagesreiseverkehrs in zwei Reihen übereinander, mit einem gemeinsamen Gang, von dem aus Leitern oder Stufen zu den Sitzplätzen in den beiden Reihen führen.

Derartige Anrodnungen sind beispielweise in Eisenbahnwagen, aber auch in Flugzeugen, Tragflügelbooten, Omnibussen etc. einsetzbar.

Im Tagesreiseverkehr der Eisenbahn auf stark belasteten Strecken werden immer häufiger Doppelstockwaggons eingesetzt, selbst im Hochgeschwindigkeitsverkehr, wie z.B. beim TGV in Frankreich oder beim Shinkansen in Japan.

Bei den bislang in der Praxis verwendeten doppelstöckigen Waggons sind nicht nur die Sitze in zwei Etagen übereinander angeordnet, sondern es sind auch zwei Mittelgänge übereinander vorgesehen. Dies hat zur Folge, daß durch die erforderlichen Treppen viel Raum verloren geht, und daß die Waggonhöhe wie auch die Fahrzeugmasse wesentlich größer als bei einstöckiger Bauweise ist. Bezogen auf den Rauminhalt, weisen Doppelstockwaggons deshalb nur eine um ca. 30% größere Sitzplatzkapazität als herkömmliche Eisenbahnwagen auf und sind somit im Fernverkehr angesichts ihres erhöhten konstruktiven Aufwands und der relativ hohen Anschaffungskosten pro Sitzplatz kaum effizienter als herkömmliche Wagen.

Ein weiterer Nachteil ergibt sich speziell bei Hochgeschwindigkeitszügen dadurch, daß der deutlich vergröβerte Waggonquerschnitt einen höheren Luftwiderstand und somit einen erhöhten Energieverbrauch zur Folge hat. Darüberhinaus ist das deutlich erhöhte Fahrzeuggewicht gerade im Hochgeschwindigkeitsverkehr nur schwer zu beherrschen, da die extrem hohen Wagen in Kurven nach außen wanken.

In der Patentliteratur ist auch vorgeschlagen worden, in Eisenbahnwaggons die Sitze in zwei Ebenen so anzuordnen, daß gegenüber der einstöckigen Bauweise die Waggonhöhe nicht oder nur geringfügig erhöht wird:

Aus der US-PS 2 364 094 ist eine gattungsgemäße Anordnung mit zwei Sitzebenen mit Vis-a-vis-Bestuhlung und einem einzigen gemeinsamen Mittelgang bekannt, von dem aus Stufen nach oben und teilweise auch nach unten zu den Sitzen führen.

Ähnliche Anordnungen sind aus der FR-PS 943.852 und der DE-PS 878 213 bekannt.

Allen diesen Platzanordnungen ist jedoch gemeinsam, daß zwischen den Rückenlehnen der unteren Sitze ein relativ großer ungenutzer Raum vorhanden ist. Deshalb ist dieses Prinzip nur für den Nachtreiseverkehr geeignet, wenn die Rückenlehnen heruntergeklappt sind, um die Plätze als Liegen, z.T. auch als Schlafwagenbetten, zu verwenden.

Weiterhin sind doppelstöckige Reihenbestuhlung mit Leitern, die von einem Mittelgang in der unteren Ebene aus zu jeweils zwei oberen Sitzen führen, wobei die unteren Sitze auf der Höhe des Mittelganges angeordnet sind, aus der FR-PS 605.451 bekannt. Diese Bauweise hat den Nachteil, daß man zum einen bis zu den oberen Sitzen einen relativ großen Höhenunterschied überwinden muß, was unbequem ist, und daß man zum anderen die unteren Sitzplätze nur in gebückter Haltung erreichen bzw. verlassen kann. Ein aufrechtes Stehen oder Gehen unmittelbar vor diesen Sitzen ist solange nicht möglich, als die Waggonhöhe nicht vergrößert wird.

Eine doppelstöckige Reihen- oder Vis-a-vis-Bestuhlung, wobei jede Etage einen eigenen Gang besitzt, der gegen den Gang der jeweils anderen Etage versetzt ist, ist aus der FR-PS 1.086.111 bekannt. Diese Bauweise führt jedoch dazu, daß auf der zweiten Ebene über dem unteren Seitengang keine Sitzplätze angebracht werden können, daß vor jedem Platz am Fenster in der unteren Ebene keine ausreichende Raumhöhe zum aufrechten Gehen oder Stehen vorhanden ist und daß, wie beim klassischen Doppelstockwaggon, platzaufwendige Treppen notwendig sind.

In der FR-PS 461 5931 sind auf zwei Ebenen angeordnete Sitze quer zur Fahrtrichtung mit mindestens einem Gang pro Ebene beschrieben, wobei der Raum über dem unteren Gang als Sitzfläche des Obergeschosses genutzt wird. Sieht man davon ab, daß das Sitzen quer zur Fahrtrichtung ungewohnt und möglicherweise unangenehm ist, so hat diese Anordnung den Nachteil, daß auf einer der beiden Ebenen sogar zwei Gänge benötigt werden, um die Plätze erreichen bzw. diese verlassen zu können, und daß wiederum Treppen mit großem Platzbedarf erforderlich sind. Insgesamt geht also viel Raum für Sitzplätze verloren.

Auf zwei Ebenen verschachtelte Abteile, die die gesamte Waggonbreite einnehmen und eine Vis-a-vis-Bestuhlung aufweisen, wobei man jedes obere Abteil nur durch eine Treppe von einem unteren Abteil aus erreicht, das jeweils eine eigene Außentür besitzt, da der Waggon keinen gemeinsamen Gang besitzt, sind aus dem in Revue de l'aluminium, 2/1950, N 163, S. 62 ohne Verfasserangabe erschienenen Artikel "Des voitures à grande capacité à compartiments imbriqués" bekannt. Der Raum zwischen den Rückenlehnen der unteren Sitzgruppen kann nicht genutzt werden und ist somit verloren. Des weiteren scheidet dieses Prinzip im Fernverkehr vollkommen aus, da für Fahrgäste wie Personal keine Durchgangsmöglichkeit durch den ganzen Wagen oder Zug besteht.

Alle genannten Sitzplatzanordnungen haben gemein, daß bei gleichem Rauminhalt des Fahrzeugs nur 20 bis 30% mehr Sitzplätze realisiert werden können oder, daß hohe Leitern und eine niedrige Raumhöhe zwischen den Sitzreihen von großem Nachteil erforderlich sind.

Wegen ihrer geringen Effizienz haben diese Sitzplatzanordnungen keine oder keine nennenswerte Verbreitung gefunden.

Der Erfindung liegt die Aufgabe zugrunde, eine Anordnung von Sitzplätzen in Fahrzeugen in zwei Reihen übereinander, mit einem gemeinsamen Gang, von dem aus Leitern oder Stufen zu den Sitzplätzen in den beiden Reihen führen, derart weiterzubilden, daß bei Fahrzeugen des Fernverkehrs und insbesondere bei Eisenbahnwägen bei möglichst geringen Investitions- und Betriebskosten pro Sitzplatz das Angebot an Sitzplätzen stark ausgeweitet werden kann, ohne daß der Fahrzeugquerschnitt zwangsläufig vergrößert, das Gewicht des Fahrzeugs nennenswert erhöht oder die Bequemlichkeit für die Reisenden (aufrechtes Gehen und Stehen vor den Sitzen, minimale Höhenunterschiede beim Treppensteigen) verringert wird.

Eine erfindungsgemäße Lösung dieser Aufgabe ist im Patentanspruch 1 angegeben. Weiterbildungen der Erfindung sind Gegenstand der Unteransprüche.

Erfindungsgemäß sind die Sitzplätze derart versetzt übereinander angeordnet,
- daß der Fußboden vor sämtlichen Sitzen der oberen Reihe die Decke über allen Sitzflächen der unteren Reihe bildet, und
- daß die Sitzfläche sämtlicher Sitze der oberen Reihe die Decke über dem Fußraum vor allen Sitzen der unteren Reihe bildet.

Mit der erfindungsgemäßen Anordnung ist es möglich, die Zahl der Sitzplätze, die beispielsweise zwischen den Drehgestellen eines Eisenbahnwaggons untergebracht werden können, unter Beibehaltung des herkömmlichen Fahrzeugquerschnitts zu verdoppeln. Da kein zweiter Mittel- oder Seitengang erforderlich ist, entfallen die sonst notwendigen Treppenaufgänge, so daß der Innenraum des Waggons oberhalb der Drehgestelle zumindest für eine einstöckige Sitzplatzanordnung genutzt werden kann. Die Türen des Eisenbahnwagens können dabei in üblicher Weise angeordnet sein.

Bei gleichbleibendem Volumen des Waggons kann die Zahl der Sitzplätze gegenüber der herkömmlichen Anordnung mit nur einer Ebene um 80% vergrößert werden, während die obengenannten Sitzplatzanordnungen auf zwei Ebenen nur eine Steigerung um 20 bis 30% ermöglichen.

Eine Vergrößerung der Wagenhöhe über das bisherige Maß einstöckiger Eisenbahnwagen hinaus ist nicht erforderlich. Das Gesamtgewicht des Waggons erhöht sich auf diese Weise gegenüber der herkömmlichen einstöckigen Bauweise nur geringfügig, vielmehr ergibt sich, bezogen auf den einzelnen Sitzplatz, sogar fast eine Halbierung des Fahrzeuggewichts. Ebenso wird der Energieverbrauch pro Sitzplatz gegenüber herkömmlichen Eisenbahnwagen fast halbiert. Insgesamt können die Investitions- und die Betriebskosten pro Sitzplatz drastisch reduziert werden.

Bei der erfindungsgemäßen Anordnung bleibt vor sämtlichen Sitzplätzen die volle Raumhöhe erhalten, die zum aufrechten Stehen und Gehen notwendig ist. Gleichzeitig ist der Zugang zu den Plätzen vom Mittel- oder Seitengang aus bzw. das Betreten des Mittel- oder Seitengangs von den Sitzplätzen aus bequem möglich, da nur ein geringer Höhenunterschied nach oben bzw. unten mit wenigen Treppenstufen zu überwinden ist.

Darüberhinaus ergeben sich aufgrund der hohen Sitzhöhe in der oberen Reihe hervorragende Sichtverhältnisse aus den Fenstern (Panoramablick), so daß die Bahnfahrt einen hohen Erlebniswert erhält und somit attraktiver als bisher wird.

Die vorliegende erfindungsgemäße Anordnung eignet sich nicht nur für den Eisenbahnverkehr auf größeren Entfernungen, sondern auch für Fernreisebusse, für den Flugverkehr, für Schiffe und bringt auch hier die genannten Vorteile.

Dabei ist es möglich, die Sitze in beiden Reihen in Reihenbestuhlung (Anspruch 2) oder in Vis-avis-Bestuhlung (Anspruch 3) anzuordnen.

Der gemeinsame Gang kann ein Mittelgang oder ein Seitengang sein (Ansprüche 5 bzw. 6).

In jedem Falle ist es jedoch gemäß Anspruch 7 bevokzugt, wenn der gemeinsame Gang etwa in der Mitte zwischen dem Fußboden der oberen Reihe und dem der unteren Reihe angeordnet ist.

Um die Gangbreite zu erhöhen, kann gemäß Anspruch 8 eine einklappbare Abdeckung vorgesehen werden, die die oberste Stufe zu den Sitzen der unteren Reihe abdeckt.

Die erhöhte Anordnung des gemeinsamen Gangs macht es möglich, daß die längs des Fahrzeugs verlaufende Leitungen unter dem gemeinsamen Gang verlegt werden, so daß sie für Wartungszwecke leicht zugänglich sind.

Die vorliegende Sitzplatzanordnung ist prinzipiell nicht auf zwei Ebenen beschränkt, sondern läßt auch eine Anordnung der Sitze auf mehr als zwei Ebenen zu (z.B. auf Schiffen).

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigen:
- Fig. 1a: einen (teilweisen) Längsschnitt durch einen Waggon mit Reihenbestuhlung,
- Fig. 1b: einen (teilweisen) Längsschnitt durch einen Waggon mit Vis-a-vis-Bestuhlung,
- Fig. 2: einen Aufblick auf die Sitze des in Fig. 1b dargestellten Waggon, und
- Fig. 3: Querschnitte durch den in Fig. 1b dargestellten Waggon an verschiedenen Stellen.

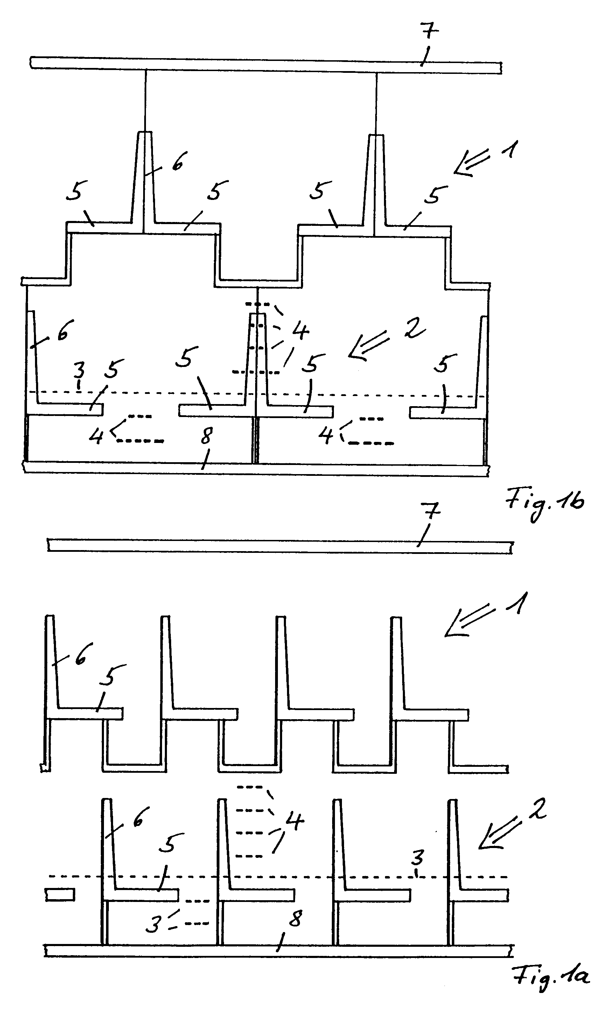

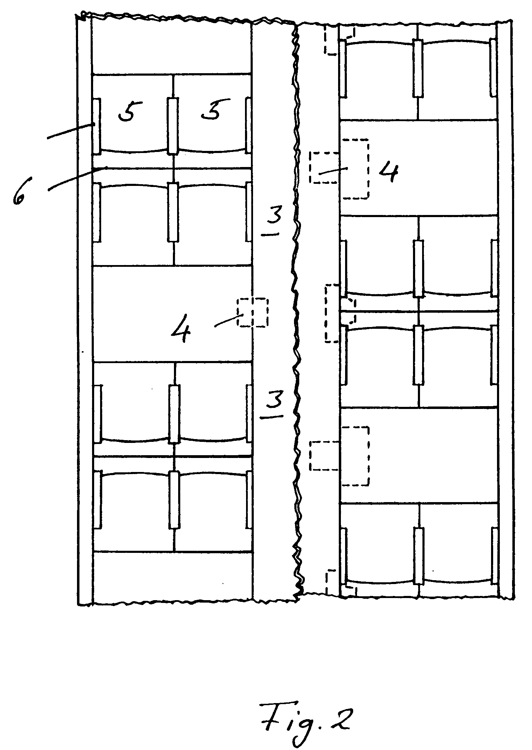

Fig. 1 zeigt zwei Varianten der erfindungsgemäßen Anordnung von Sitzplätzen in Fahrzeugen in zwei Reihen 1 und 2 übereinander. Für die beiden Reihen ist ein gemeinsamer Gang 3 vorgesehen, der etwa in der Mitte zwischen den beiden Reihen angeordnet ist und von dem aus (nur zum Teil dargestellte) Stufen 4 zu den Sitzplätzen nach oben und nach unten führen. Die Sitzplätze weisen jeweils eine Sitzfläche 5 und eine Rückenlehne 6 sowie gegebenenfalls Armlehnen 6' (nur in Fig. 2 dargestellt) auf. Mit 7 sind das Dach und mit 8 der Boden des Waggons bezeichnet.

Den Fig. 1a und 1b ist zu entnehmen, daß beiden Varianten gemeinsam ist, daß die Sitzplätze derart versetzt übereinander angeordnet sind, daß der Fußboden vor sämtlichen Sitzen der oberen Reihe 1 die Decke über den Sitzflächen 5 der unteren Reihe 2 bildet, und daß die Sitzfläche 5 der Sitze der oberen Reihe 1 die Decke über dem Fußraum vor sämtlichen Sitzen der unteren Reihe 2 bildet.

Fig. 2 zeigt eine Aufsicht auf die Sitze bei der in Fig. 1b dargestellten Variante mit Vis-a-vis-Bestuhlung. Dabei verläuft der Schnitt in der linken und der rechten Reihe in unterschiedlicher Höhe.

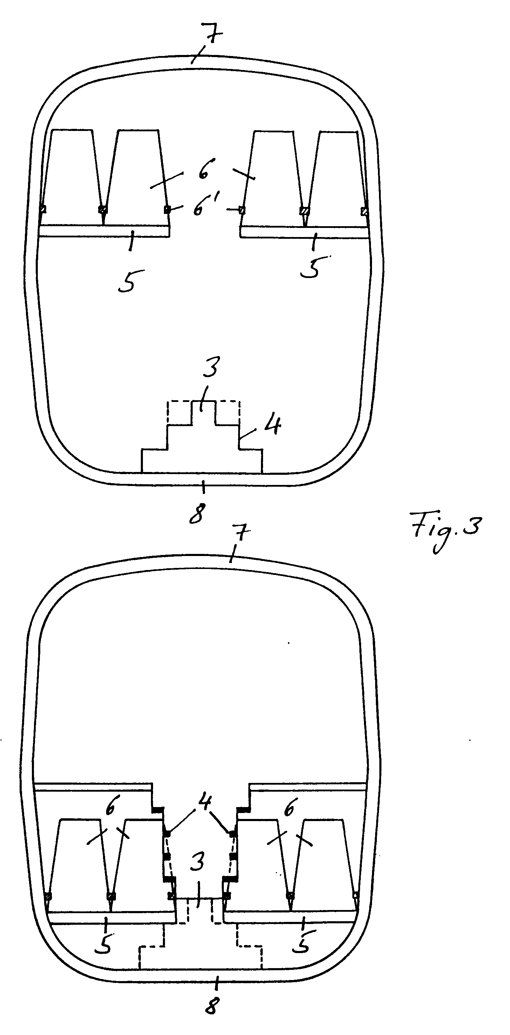

Fig. 3 zeigt Querschnitte durch die in Fig. 1b dargestellte Variante an verschiedenen Stellen des Waggons.

Den Figuren ist zu entnehmen, daß sowohl bei der Vis-a-vis-Bestuhlung als auch bei der Reihenbestuhlung jeweils zwei Plätzen nebeneinander so angeordnet sind, daß die Unterseite der zweiten Etage, die gleichzeitig das "Dach" der ersten Etage bildet, keine konstante Höhe besitzt. Vielmehr wird der Raum, der sich unmittelbar unter den Sitzflächen der zweiten Ebene befindet, der ersten Etage zugeordnet, so daß diese hier eine deutlich größere Raumhöhe hat, die ausreichend hoch ist, damit Fahrgäste zwischen den Sitzen der unteren Etage aufrecht stehen können. Auf der zweiten Ebene ergibt sich vom Fußboden bis zum Waggondach ohnedies genügend Platz, um ein aufrechtes Stehen und Gehen zu erlauben. Die Sitze der einen Ebene sind zu den benachbarten Sitzen der anderen Ebene soweit versetzt, daß sich die Füße der Reisenden in der zweiten Ebene - gleichgültig, ob man hier sitzt oder steht - genau über den Köpfen der Passagiere befinden, die in der ersten Ebene sitzen, und daß sich, wenn Personen in der unteren Ebene zwischen ihren Sitzen stehen, deren Köpfe unmittelbar unter den Sitzflächen der zweiten Ebene befinden.

Beide Ebenen haben einen gemeinsamen Mittel- oder Seitengang, der ungefähr auf halber Höhe zwischen den beiden Ebenen verläuft. Von diesem Mittel- oder Seitengang aus führen Treppen mit jeweils nur wenigen Stufen zu den beiden Ebenen nach unten bzw. nach oben.

## Patentansprüche

1. Anordnung von Sitzplätzen in Fahrzeugen des Tagesreiseverkehrs in zwei Reihen übereinander, mit einem gemeinsamen Gang, von dem aus Leitern oder Stufen zu den Sitzplätzen in den beiden Reihen führen,
dadurch **gekennzeichnet**, daß die Sitzplätze derart versetzt übereinander angeordnet sind,
- daß der Fußboden vor allen Sitzen der oberen Reihe die Decke über allen Sitzflächen der unteren Reihe bildet,
- daß die Sitzfläche aller Sitze der oberen Reihe die Decke über dem Fußraum vor allen Sitzen der unteren Reihe bildet, und
- daß vor sämtlichen Sitzplätzen die volle Raumhöhe zum aufrechten Stehen und Gehen erhalten bleibt.

2. Anordnung nach Anspruch 1,
dadurch **gekennzeichnet.** daß die Sitze in beiden Reihen in Reihenbestuhlung angeordnet sind

3. Anordnung nach Anspruch 1,
dadurch **gekennzeichnet,** daß die Sitze in beiden Reihen in Vis-avis-Bestuhlung angeordnet sind.

4. Anordnung nach einem der Ansprüche 1 bis 3,
dadurch **gekennzeichnet,** daß die Leitern oder Stufen von dem gemeinsamen Gang zu den Trittflächen vor den Sitzen führen.

5. Anordnung nach einem der Ansprüche 1 bis 4,
dadurch **gekennzeichnet,** daß der gemeinsame Gang ein Mittelgang ist.

6. Anordnung nach einem der Ansprüche 1 bis 4,
dadurch **gekennzeichnet,** daß der gemeinsame Gang ein Seitengang ist.

7. Anordnung nach einem der Ansprüche 1 bis 6,
dadurch **gekennzeichnet,** daß der gemeinsame Gang etwa in der Mitte zwischen dem Fußboden der oberen Reihe und dem der unteren Reihe angeordnet ist.

8. Anordnung nach einem der Ansprüche 1 bis 7,
dadurch **gekennzeichnet,** daß eine einklappbare Abdeckung die oberste Stufe zu den Sitzen der unteren Reihe abdeckt.

9. Anordnung nach einem der Ansprüche 1 bis 8,
dadurch **gekennzeichnet,** daß längs des Fahrzeugs verlaufende Leitungen unter dem gemeinsamen Gang verlegt sind.

10. Verwendung einer Anordnung nach einem der Ansprüche 1 bis 9 in einem Luft- oder Seefahrzeug.

11. Verwendung einer Anordnung nach einem der Ansprüche 1 bis 9 in einem Landfahrzeug.

12. Verwendung nach Anspruch 11,
dadurch **gekennzeichnet,** daß das Landfahrzeug ein Eisenbahnwagen ist.

13. Verwendung nach Anspruch 12,
dadurch **gekennzeichnet,** daß der Querschnitt des Eisenbahnwagens dem Querschnitt eines herkömmlichen einstökkigen Eisenbahnwagens entspricht.

14. Verwendung nach Anspruch 12 oder 13,
dadurch **gekennzeichnet,** daß die Türen des Eisenbahnwagens in üblicher Weise angeordnet sind.
